# EUROPÄISCHE PATENTSCHRIFT

(11) **EP 3 453 561 B1**
(45) Veröffentlichungstag und Bekanntmachung des Hinweises auf die Patenterteilung: **12.03.2025**
(21) Anmeldenummer: 18176785.6
(22) Anmeldetag: 08.06.2018
(51) Int. Cl.: B60N 2/015, B60N 2/08, B64D 11/06

(54) **VORRICHTUNG ZUM TEMPORÄREN VERBINDEN EINES BEWEGTEN GEGENSTANDES MIT EINER HALTESCHIENE**
DEVICE FOR TEMPORARY CONNECTION OF A MOBILE OBJECT WITH A HOLDING RAIL
DISPOSITIF DE RACCORDEMENT TEMPORAIRE D'UN OBJET MOBILE À UN RAIL DE RETENUE

(30) Priorität: 06.09.2017 DE 102017215659
(43) Veröffentlichungstag der Anmeldung: 13.03.2019
(73) Patentinhaber: Georg Fischer Metallverarbeitung GmbH, 89231 Neu-Ulm/Schwaighofen (DE)
(72) Erfinder: Fischer, Thomas, 89231 Neu-Ulm (DE)
(74) Vertreter: Sawodny, Michael-Wolfgang

(56) Entgegenhaltungen:
- EP-A1- 1 790 521
- EP-A1- 2 340 963
- EP-A1- 2 974 962
- EP-A2- 2 253 500

## Beschreibung

Die Erfindung betrifft eine Vorrichtung zum temporären Verbinden eines bewegbaren Gegenstandes, insbesondere eines Fahrzeugsitzes mit einer Halteschiene.

Vorrichtungen zur temporären Befestigungen eines bewegbaren Gegenstandes, insbesondere eines Fahrzeugsitzes in einer Halteschiene sind aus einer Vielzahl von Anmeldungen bekannt geworden.

So zeigt die EP 1790521 A1 eine verstellbare Sitzhalterung, bei der lediglich ein axial verstellbarer Arretierbolzen mit Hilfe einer Hebeleinrichtung abgesenkt werden kann. Durch das Absenken des bzw. der Arretierbolzen in der EP 1 790 521 A1 wird eine Doppelfunktion übernommen. Zum einen greift der Arretierbolzen in eine entsprechende Arretieröffnung der Bodenschiene ein und sorgt für eine genaue Positionierung, zum anderen werden durch den Arretierbolzen die an der Unterseite der Fußplatte vorstehenden Führungsbolzen nach oben gezogen.

Ein Spannbolzen wird in der EP 1 790 521 A1 nicht gezeigt, lediglich ein Arretierbolzen mit einer Doppelfunktion.

Dadurch werden die Führungsbolzen gegen die Oberseite der Nut der Bodenschiene gedrückt. Nachteilig an einer derartigen Ausführungsform ist, dass die Fußplatte nicht mehr mit der Halteschiene zur Anlage kommt. Es besteht also ein Spalt zwischen Fußplatte und Boden.

Dies bedeutet, dass das von dem Stuhlfuß getragene Sitzgestell über ein gewisses Spiel verfügt. Ein weiterer Nachteil der Anordnung gemäß der EP 1 790 521 A1 ist, dass der Stuhlfuß und somit der Fahrzeugsitz nach oben, entgegen der Belastungsrichtung, verspannt wird. Das Gewicht des Fahrgastsitzes und das Gewicht des Fahrgastes wirken gegen die Spannkraft der federnden Platte und heben diese teilweise auf. Durch den Spalt zwischen Schiene und Bodenplatte wird keine formschlüssige Verbindung erreicht.

Aus der EP 0993392 A1 ist eine Vorrichtung für eine schnell lösbare, verschiebbare und schnell arretierbare Befestigung eines Fahrzeugausrüstungsteils bekannt geworden, bei dem wenigstens zwei Spannelemente durch Schräg- oder Keilflächen in Richtung der Bodenschiene gezogen werden, so dass eine Klemmwirkung verursacht wird. Zusätzlich zu den Spannelementen ist auch eine Positioniereinrichtung vorgesehen. Eine Ausgestaltung einer Vorrichtung mit der die Positioniereinrichtung zusammen mit den Spannelementen betätigt werden kann, ist in der EP 0993392A1 nicht angegeben. Die Positioniereinrichtung selbst wird durch ein Federelement gehalten.

Die Betätigungseinrichtung der EP 0 993 392 A1 wird durch eine Anordnung gemäß der DE 198 51 392A1 weitergebildet. Bei der Anordnung gemäß der DE 198 51 392A1 wird zur Betätigung wiederum ein durch Federn gehaltener Arretierbolzen eingesetzt, der über eine Kulissenscheibe und Steuerkurven die Klemmstifte ansteuert. Eine derartige Kulissensteuerung weist einen komplizierten und aufwendigen Aufbau auf. Die Klemmstifte gemäß der DE 198 51 392 A1 werden wiederum mit Federn gelagert. Zwar kann durch die Klemmstifte ein spielfreies Verspannen mit der Bodenschiene erreicht werden, jedoch handelt es sich um kein form- und kraftschlüssiges Anliegen der Klemmstifte an der Bodenschiene. Im Belastungsfall kann beispielsweise die Vorrichtung gegen die Federkraft der Federn angehoben werden, wodurch Klappergeräusche entstehen können. Des Weiteren werden zum spielfreien Verspannen eine Vielzahl von Spannbolzen benötigt.

Aus der EP 2 253 500 A2 ist eine Vorrichtung zum temporären Verbinden eines bewegbaren Gegenstandes mit einer Halteschiene bekannt geworden, bei der mittels einer Hebeleinrichtung, die einen Hebelarm umfasst, der um einen einzigen Drehpunkt verschwenkbar ist sowohl ein Arretierbolzen, wie ein Spannbolzen angelenkt wird, wobei der Arretierbolzen den Gegenstand arretiert und der Spannbolzen im Fall der Arretierung form- und kraftschlüssig an den Längsnuten der Halteschiene anliegt. Der Hebelarm gemäß der EP 2 253 500 A2 wirkt von Beginn an als zweiseitiger Hebel. Nachteilig an der Ausgestaltung gemäß der EP 2 253 500 A2 ist, dass die Arretierung und die Verspannung durch den um einen einzigen festen Drehpunkt drehbaren Hebel gleichzeitig erfolgen und durch die zu früh einsetzende Verspannung die Suchfunktion des Arretierbolzens eingeschränkt wird. Des Weiteren ist der Mechanismus schwergängig, da der Arretierbolzen durch die zu frühe Verspannung nicht exakt fluchtet, d. h. in das Loch der Halteschiene eingreift. Des Weiteren reibt der Arretierbolzen seitlich an der Halteschiene. Nachteilig an der EP 2 253 500 A2 ist zudem, dass der bewegbare Gegenstand, insbesondere der Fahrzeugsitz schon gegen die einsetzende Spannkraft in die Arretierstellung bewegt werden muss.

Auch die EP 1 892 142 A1 zeigt eine Vorrichtung mit einer aufwendigen Kulissensteuerung mit kompliziertem Aufbau sowie Federn am Arretierbolzen analog zum Aufbau wie in der DE 198 51 392 A1.

Eine weitere Schrift, die eine Einrichtung zum lösbaren Verbinden eines Sitzes zeigt, ist die DE 10 2005 023 007 B3. Anstelle eines Arretierbolzens wird bei der DE 10 2005 023 007 B3 ein Rastblech eingesetzt. Bei der DE 10 2005 023 007 B3 erfolgt die Verspannung wiederum mit Hilfe der Führungsbolzen, indem ein Verriegelbalken angehoben und abgesenkt wird.

Aufgabe der Erfindung ist es somit, die Nachteile des vorgenannten Standes der Technik zu vermeiden und eine einfache und schnell lösbare Anordnung anzugeben, mit dem eine sichere und schnelle Halterung erreicht wird.

Erfindungsgemäß wird diese Aufgabe durch eine Vorrichtung gemäß Anspruch 1 gelöst.

Die Vorrichtung zum zeitweiligen, d.h. zum temporären Verbinden eines bewegbaren Gegenstandes, insbesondere eines Fahrzeugsitzes, mit einer Halteschiene umfasst eine axial verschiebbare Arretiervorrichtung und eine axial verschiebbare Spannvorrichtung im Abstand zur Arretiervorrichtung zum Eingriff in die Halteschiene. Die Arretiervorrichtung und die Spannvorrichtung sind durch eine Hebeleinrichtung gemeinsam axial verstellbar.

Erfindungsgemäß umfasst die Hebeleinrichtung einen um einen ersten Drehpunkt und um einen zweiten Drehpunkt verschwenkbaren Hebelarm, wobei der Hebelarm um den ersten Drehpunkt als einseitiger Hebel wirkt, der die Arretiervorrichtung und über den zweiten Drehpunkt als zweiseitiger Hebel die Spannvorrichtung anlenkt. So wird erreicht, dass die Arretiervorrichtung und die Spannvorrichtung mit Hilfe des Hebelarmes in entgegen gesetzte Richtungen bewegt werden. Wird zunächst der Hebelarm um den ersten Drehpunkt als einseitiger Hebel bewegt, so fällt die Arretiervorrichtung, insbesondere der Arretierbolzen in einem ersten Langloch des Arretierprofiles nach unten, bis die Arretierung des Arretierprofiles in der Halteschiene erfolgt ist. Dann wechselt der Drehpunkt des Hebelarmes zum zweiten Drehpunkt und der Hebel als zweiseitiger Hebel hebt die Spannvorrichtung im zweiten Langloch an, so dass mit Hilfe der Spannvorrichtung das Arretierprofil in der Halteschiene verspannt wird.

Im Gegensatz zur EP 2 253 500 A2 hat die vorliegende Erfindung nicht einen einzigen festen Drehpunkt. Die Erfindung umfasst für den Hebelarm zwei Drehpunkte einen ersten Drehpunkt und einen zweiten Drehpunkt. In einem ersten Verfahrensschritt, bei der die Arretiervorrichtung angelenkt wird, wirkt der Hebel als einseitiger Hebel. Durch die erfindungsgemäße Anordnung sind die Arretierung und der Spannvorgang voneinander getrennt. Die Spannvorrichtung verbleibt bei der Bewegung der Arretiervorrichtung durch ein Federelement in einer unteren Ausgangsstellung. Über den ersten Drehpunkt wird durch einen einseitigen Hebel die Arretiervorrichtung bzw. der Arretierbolzen nach unten in eine Halteschiene bewegt, bis die Arretiervorrichtung bzw. der Arretierbolzen sich in einer Endstellung befindet. Nach Absenken der Arretiervorrichtung ist der Arretiervorgang vollständig abgeschlossen. Durch weiteres Bewegen des Hebelarmes wechselt jetzt der Drehpunkt, d. h. der Hebelarm wird um einen zweiten Drehpunkt bewegt. Bei Bewegung um den zweiten Drehpunkt wird der Hebelarm zum zweiseitigen Hebel. Erst in diesem zweiten Verfahrensschritt, nämlich Bewegung um einen zweiten Drehpunkt, wird die Spannvorrichtung nach oben gegen das Federelement bewegt und verspannt den bewegbaren Gegenstand in der Halteschiene. Dies führt dazu, dass beim Arretiervorgang kein Verspannen erfolgt und damit eine zu frühe Verspannung vermieden wird. Bei der Erfindung wird eine besonders feste Verspannung erreicht, da die Spannvorrichtung kraft- und formschlüssig mit einer T-förmigen Nut der Halteschiene zur Anlage kommt. Bevorzugt kann das Federelement eine Druckfeder und/oder ein Federblech umfassen.

Des Weiteren ist es vorteilhaft, wenn die Vorrichtung wenigsten ein Führungselement, umfasst. In einer besonders vorteilhaften Ausführungsform sind die Führungselemente ein Formblech oder ein Federblech. Gegenüber den aus der EP 2 253 500 A2 bekannt gewordenen Führungsbolzen zur Führung des bewegbaren Gegenstandes in der Längsnut hat die Verwendung von Form- oder Federblech den Vorteil der einfachen Fertigbarkeit. Die Verwendung einer Hebelvorrichtung die sowohl die Arretiervorrichtung nach unten und die Spannvorrichtung nach oben bewegt gemäß der Erfindung hat den Vorteil, dass die Ansteuerung wesentlich einfacher ausgestaltet ist als die komplizierte, aus der DE 198 51 392A1 bekannt gewordene Kulissensteuerung.

Wie zuvor beschrieben, werden Arretiervorrichtung bzw. Arretierbolzen und Spannvorrichtung gemäß der Erfindung mit der Hebeleinrichtung in entgegengesetzte Richtungen bewegt. Gemäß der Erfindung ist die Hebeleinrichtung so ausgebildet, dass, befindet sich der Hebel in einer geöffneten Stellung, die Arretiervorrichtung angehoben und die Spannvorrichtung abgesenkt sind. Erfindungsgemäß ist vorgesehen, dass die Spannvorrichtung in der abgesenkten Stellung durch das Federelement z. B. eine Druckfeder gehalten wird bis der Arretiervorgang abgeschlossen ist. Wird der Hebel aus der geöffneten Stellung im Langloch nach unten verbracht, z. B. durch Absenken, so wird die Arretiervorrichtung nach unten bewegt. Nach Abschluss des Arretiervorganges wechselt der Drehpunkt der Hebeleinrichtung vom ersten zum zweiten Drehpunkt. Durch Drehen der Hebeleinrichtung um den zweiten Drehpunkt wird die Spannvorrichtung im Langloch nach oben gezogen und der bewegbare Gegenstand in der Halteschiene verspannt. Der Vorteil der Erfindung ist, dass erst nach Abschluss des Arretiervorganges der Spannvorgang erfolgt. Der Hebelarm lenkt zunächst bei Drehung um den ersten Drehpunkt z. B. über eine Anlenkachse die in axialer Richtung verschiebbare Arretiervorrichtung an. Die Anlenkachsen bewegen sich in einem Langloch. Ist die Arretiervorrichtung, insbesondere der Arretierbolzen abgesenkt, und befindet sich aufgrund der Begrenzung im Arretierprofil in Form des Anschlages des ersten Langloches in der Endstellung, so wechselt der Drehpunkt des Hebelarmes vom ersten Drehpunkt zum zweiten Drehpunkt. Durch Bewegung des Hebelarmes um den zweiten Drehpunkt wird die Spannvorrichtung gegen die Federkraft des Federelementes in axialer Richtung in einem zweiten Langloch nach oben verbracht und verspannt den Gegenstand mit der Halteschiene.

Wie zuvor ausgeführt, ist der Hebelarm derart ausgebildet, dass er in eine Stellung verbracht werden kann, bei der die Spannvorrichtung kraft- und formschlüssig mit der Halteschiene verspannt wird.

In einer besonders bevorzugten Ausführungsform ist der bewegbare Gegenstand, der temporär durch die erfindungsgemäße Vorrichtung in der Halteschiene verankert wird, ein Fahrzeugsitz.

Nachfolgend soll die Erfindung anhand der Figuren beispielhaft, ohne hierauf beschränkt zu sein, beschrieben werden.

Es zeigen:
- Fig. 1: Arretierprofil einer Vorrichtung zum zeitweiligen Verbinden eines bewegbaren Gegenstandes gemäß der EP 2 253 500 A2 in geöffneter Stellung;
- Fig. 2: Arretierprofil gemäß Figur 1 in geschlossener Stellung;
- Fig. 3a-3c: prinzipielle Arbeitsweise eines Arretierprofil gemäß der Erfindung;
- Fig. 4: Vorrichtung zum temporären Verbinden eines Gegenstandes mit einem Arretierprofil und einer Hebelvorrichtung in geöffneter Stellung (kein Verspannen) gemäß der Erfindung;
- Fig. 5: Vorrichtung zum temporären Verbinden eines Gegenstandes mit einem Arretierprofil und einer Hebelvorrichtung in geschlossener Stellung (Verspannen) gemäß der Erfindung;
- Fig. 6: 3-dimensionale Ansicht einer Vorrichtung zum temporären Verbinden eines Gegenstandes mit einem Arretierprofil und einer Hebelvorrichtung;
- Fig. 7: Vorrichtung zum temporären Verbinden eines Gegenstandes mit einem Arretierprofil und einer Stangeneinrichtung zur Verlegung des Drehpunktes nach oben in den Bereich des Stuhlfußes mit geöffnetem Hebel;
- Fig. 8: Vorrichtung zum temporären Verbinden eines Gegenstandes gemäß Fig. 7 mit geschlossenem Hebel;
- Fig. 9: Führungselemente in Form eines Formbleches;
- Fig. 10: Formblech mit integrierter Feder ;
- Fig. 11: Ansicht der Halteschiene mit T-Nut.

Generell bezieht sich die Erfindung auf eine Vorrichtung zum temporären Verbinden eines bewegbaren Gegenstandes mit einer Halteschiene wie aus der EP 2 253 500A2, bekannt. Mit einer Arretiervorrichtung wird die Vorrichtung arretiert und mit einer Spannvorrichtung mit der Halteschiene verspannt. Das aus der EP 2 253 500 A2 bekannte Arretierprofil umfasst eine Hebeleinrichtung, die als Hebelarm ausgeführt ist. In der EP 2 253 500 A2 wird der Hebelarm um einen einzigen Drehpunkt verschwenkt, und zwar aus einer geöffneten Stellung, bei der die Vorrichtung nicht mit der Halteschiene verspannt ist, in eine geschlossene Stellung , bei der die Vorrichtung arretiert und mit der Halteschiene verspannt ist.

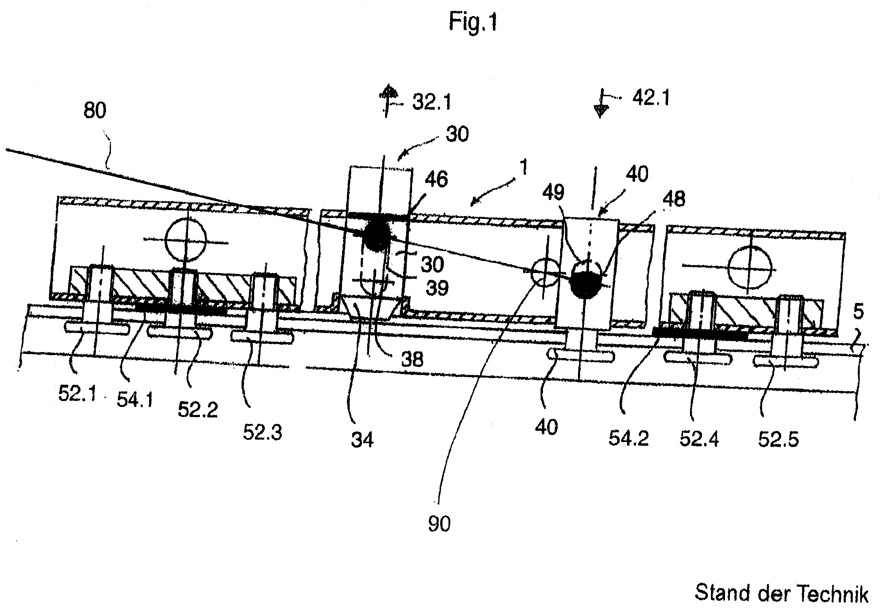

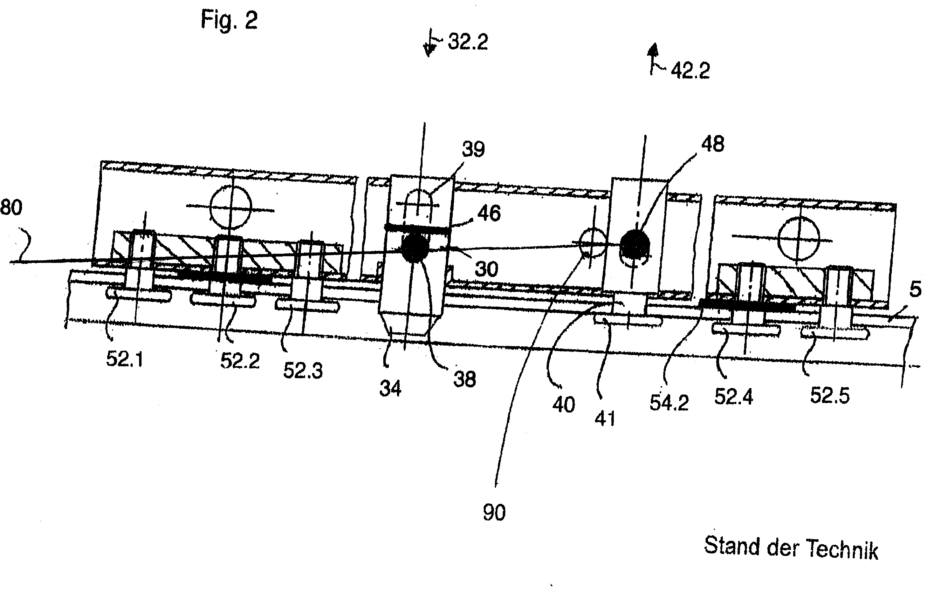

Figur 1 zeigt im Schnitt ein Arretierprofil gemäß der EP 2 253 500 A2 mit einem einzigen Drehpunkt, wobei das Arretierprofil nicht mit der Halteschiene 5 verspannt ist. Das Arretierprofil 1 gleitet auf Gleitelementen 54.1, 54.2. Die Führungsbolzen 52.1, 52.2, 52.3, 52.4, 52.5 ragen in die Halteschiene 5 hinein. Die Spannvorrichtung in Form eines Spannbolzen 40 sowie die Arretiervorrichtung in Form eines Arretierbolzen 30 werden im Arretierprofil in Aufnahmen aufgenommen 34, 44. Der Arretierbolzen umfasst einen Sprengring 46. Angelenkt wird der Arretierbolzen durch die Anlenkachse 38 sowie der Spannbolzen von der Anlenkachse 48. Die Anlenkachsen werden von der Hebeleinrichtung in axialer Richtung 32.1 bzw. 42.1 bewegt, wenn der Hebelarm nach oben in die geöffnete Stellung verbracht wird. Hierdurch wird der Arretierbolzen 30 in Richtung 32.1 angehoben und der Spannbolzen in Richtung 42.1 abgesenkt. Der Hebelarm gemäß der EP 2 253 500 A2 hat nur einen einzigen Drehpunkt 90 um den sich der Hebelarm 80 dreht. Durch Bewegen des Hebelarms 80 um den einzigen Drehpunkt wird sowohl der Arretierbolzen nach unten wie auch der Spannbolzen nach oben bewegt. Dies ist in Fig. 2 gezeigt. Bei geöffnetem Hebel wie in Fig. 1 gezeigt, liegt der Tellerrand 41 des Spannbolzens 40 nicht an der Halteschiene 5 an, d. h. es liegt keine Verspannung vor. Hierdurch bewegen sich der Arretierbolzen und der Spannbolzen in den Langlöchern 39 und 49 des Arretierprofiles. Wie in Figur 1 zu sehen ist, befindet sich im geöffneten Zustand der Arretierbolzen 30 oberhalb der Halteschiene 5, und der Spannbolzen 40 nicht in Anlage mit der Halteschiene.

Wird nunmehr der Hebel, gemäß der EP 2 253 500 A2 um den einzigen Drehpunkt 90 gedreht und nach unten verfahren, so wird, wie in Figur 2 gezeigt, der Arretierbolzen ausgelöst und fällt, wie mit Pfeil 32.2 angedeutet, mit der Hebelbewegung nach unten. Durch die Hebelbewegung wird die Anlenkachse 38 im Langloch 39 nach unten bewegt und somit auch der Arretierbolzen 30. Im Gegensatz hierzu wird durch die Hebelbewegung die der Anlenkachse 48 des Spannbolzens 40 im Langloch 49 nach oben bewegt und der Spannbolzen kraft- und formschlüssig mit der T-förmigen Nut, der sogenannten T-Nut der Halteschiene 5 verspannt. Das Arretierprofil 5 selbst wird mit der Halteschiene hierdurch weitgehend spaltlos verspannt.

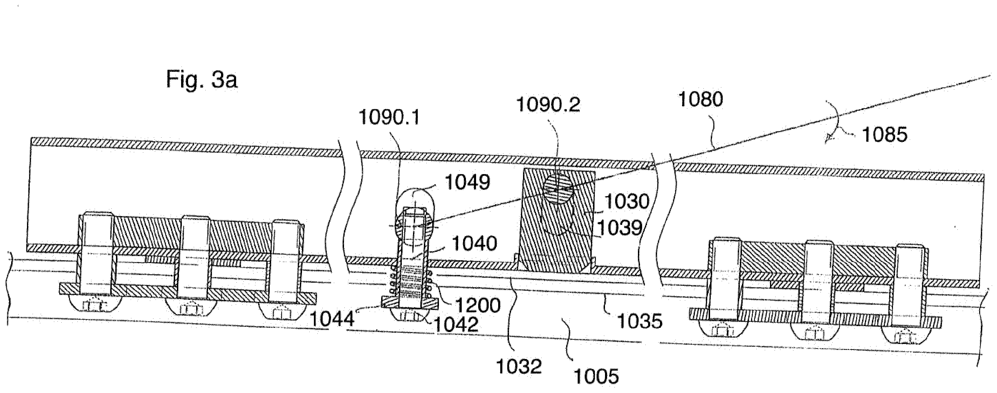

In den Figuren 3a -3c ist die erfindungsgemäße Art und Weise der Arretierung und Verspannung dargestellt.

In Figur 3a ist die Arretiervorrichtung 1030 sowie die Spannvorrichtung 1040 gezeigt. Bei der Arretiervorrichtung 1030 handelt es sich um einen Arretierbolzen, bei der Spannvorrichtung 1040 um eine Schraube 1042 mit Unterlagscheibe 1044, die jedoch durch ein Federelement 1200, vorliegend eine Spiralfeder oder eine Druckfeder in einer vorbestimmten Position unterhalb der T-Nut Oberkante der Halteschiene 1005 gehalten wird. Wiederum umfasst die Vorrichtung einen Hebel 1080, der dazu dient, sowohl den Arretierbolzen 1030 anzulenken wie auch die Spannvorrichtung 1040.

Die T-Nut Oberkante der Halteschiene wird mit 1035 bezeichnet, die Oberkante der Halteschiene mit 1032.

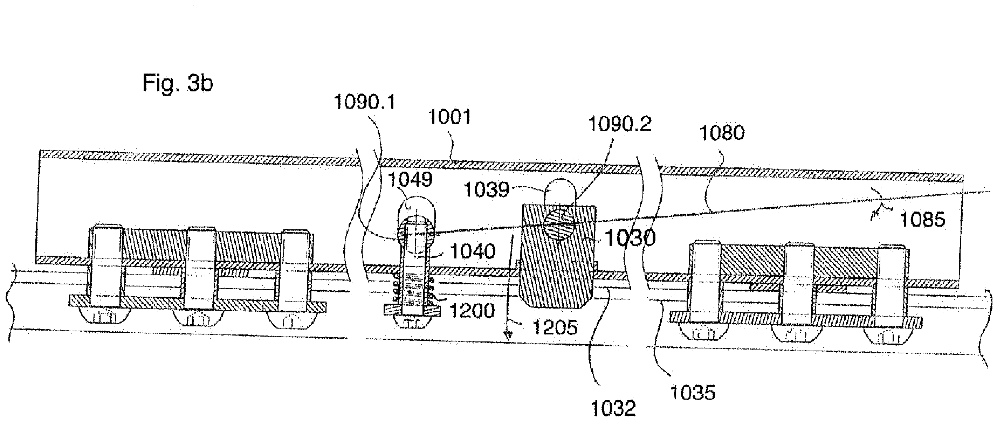

Wie aus Figur 3a hervorgeht, die die geöffnete Stellung repräsentiert, ist in der geöffneten Stellung der Arretierbolzen 1030 oberhalb der Oberkante 1032 der Halteschiene 1005 positioniert und eine Verspannung der Spannvorrichtung 1040 mit der T-Nut Oberkante 1035 der Halteschiene 1005 liegt nicht vor, da diese durch das Federelement 1200 niedergehalten wird. Der Hebelarm 1080 wird dann in Richtung 1085 nach unten bewegt. Durch das nach unten Bewegen in Richtung 1085 des Hebelarms 1080 dreht dieser sich um den ersten Drehpunkt 1090.1. Durch das Bewegen in Richtung 1085 und das Verschwenken des Hebelarms 1080 um den ersten Drehpunkt 1090.1 wird wie in Figur 3b gezeigt, der Arretierbolzen 1030 im Langloch 1039 nach unten bewegt. Das Langloch 1039 befindet sich im Arretierprofil 1001. Auf Grund des Federelementes 1200 wird die Spannvorrichtung 1040 trotz Bewegen des Arretierbolzens 1030 im Langloch 1039 aber in der Position, wie in Figur 3a gezeigt, niedergehalten. Die Bewegungsrichtung des Arretierbolzens 1030 ist mit 1205 bezeichnet. Eine Bewegung der Spannvorrichtung 1040 nach oben im Langloch 1049 erfolgt nicht. Auch das Langloch 1049 befindet sich im Arretierprofil 1001, das die Vorrichtung zum temporären Verbinden, bspw. den Stuhlfuß aufnimmt. Die Spannvorrichtung 1040 wird mit Hilfe des Federelementes 1200 gemäß Figur 3b auch bei Bewegung des Hebels 1080 in der eingezeichneten Position gehalten. Nach Abschluss des Arretiervorganges gemäß Figur 3b wechselt dann der Drehpunkt vom ersten Drehpunkt 1090.1 zum zweiten Drehpunkt 1090.2. Der Hebel, der sich nunmehr um den zweiten Drehpunkt 1090.2 dreht, ist mit 1080 bezeichnet, die Richtung der Bewegung des Hebels mit 1085.

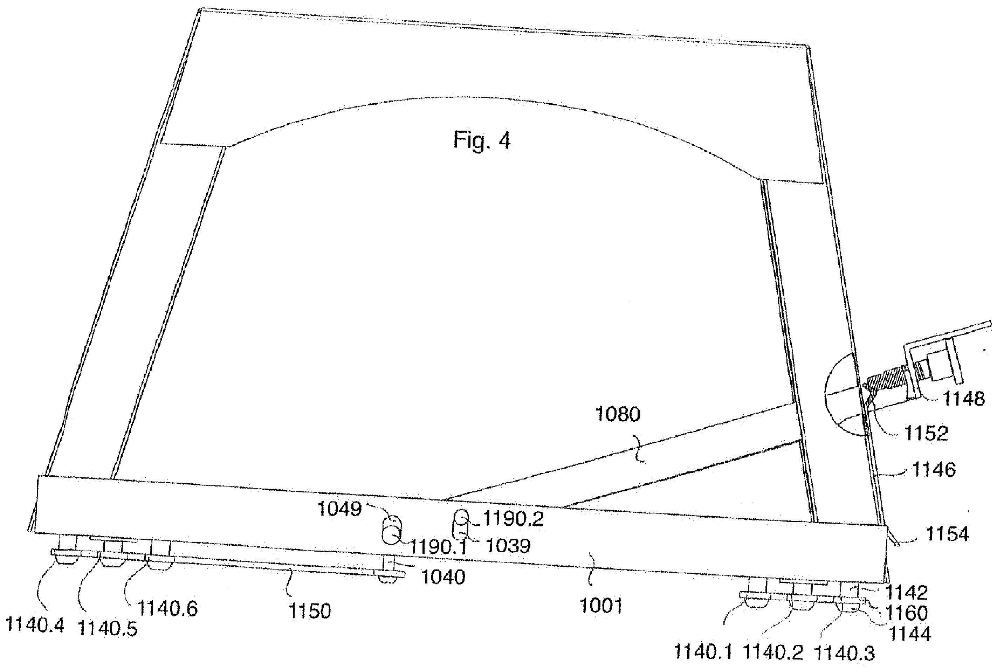

Durch die Bewegung des Hebelarms 1080 um den zweiten Drehpunkt 1090.2 wird die Spannvorrichtung 1040 im Langloch 1049 gegen die Kraft des Federelementes 1200 nach oben in Richtung 1207 verbracht und verspannt dann mit der T-Nut-Oberkante 1035 der Halteschiene 1005. In Figur 4 ist eine Vorrichtung zum temporären Verbinden eines Gegenstandes mit einem Arretierprofil 1001 gezeigt. Gleiche Bauteile wie in den Figuren 3a - 3c sind mit denselben Bezugsziffern belegt.

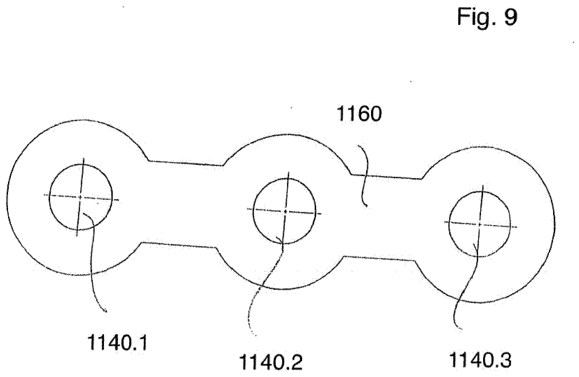

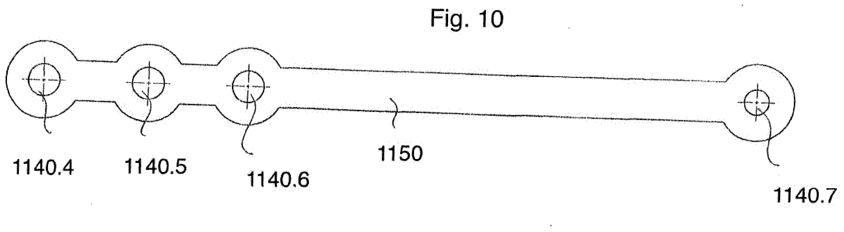

Wie aus Figur 4 hervorgeht, befindet sich der Hebel 1080 zunächst in einer geöffneten Stellung. Der Arretierbolzen 1030 befindet sich in einer angehobenen Position, so dass eine Arretierung des Arretierprofiles in der Halteschiene zunächst nicht erfolgt. Der angehobene Arretierbolzen befindet sich innerhalb des Arretierprofiles und ist daher nicht sichtbar. Ebenfalls dargestellt ist die Spannvorrichtung 1040. Das Niederhalten der Spannvorrichtung wird vorliegend durch ein als Federelement ausgebildetes Formblech in Form eines Federbleches sichergestellt. Das Federblech 1150 hält die Spanneinrichtung 1040, wie in Figur 4 dargestellt, nieder. Das Formblech 1160 und das Federblech 1150 weisen jeweils drei Bohrungen 1140.1, 1140.2, 1140.3 sowie 1140.4, 1140.5 und 1140.6 auf, die in Fig. 9 und 10 in der Draufsicht dargestellt sind.

Die Formbleche 1160, 1150 werden mit den Bohrungen 1140.1, 1140.2, 1140.3, 1140.4, 1140.5, 1140.6 mit Hilfe von Distanzbuchsen 1142 und Linsenkopfschrauben 1144 mit dem Arretierprofil 1001 verschraubt und dienen als Führungselemente. Sie ersetzen die Führungsbolzen, wie sie in der EP 2 253 500 A2 beschrieben sind.

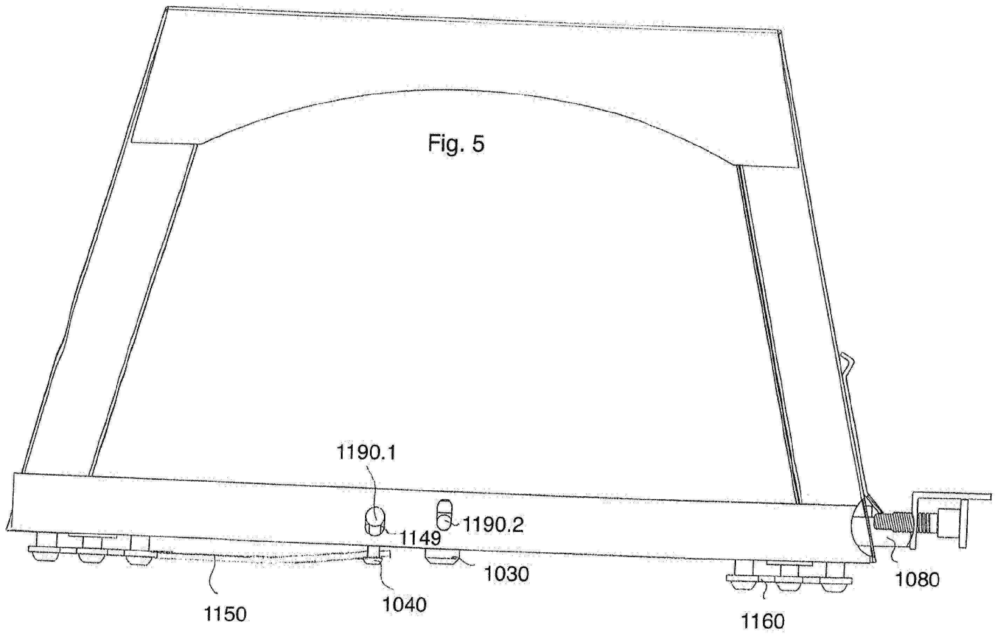

In Figur 4 deutlich zu erkennen ist auch das Sicherungsblech 1146 zur Arretierung des Federriegels 1148. Das Sicherungsblech 1146 weist einen oberen Vorsprung 1152 sowie einen unteren Anschlag 1154 für den Federriegel 1148 auf. Der obere Vorsprung 1152 verhindert, dass der Hebel 1080 aus der geöffneten Stellung unbeabsichtigt in die geschlossene Stellung verbracht werden kann, wobei mit Hilfe des Federriegels 1148 der am Vorsprung 1152 anliegt der Hebel in der geöffneten Stellung gehalten wird. Der untere Anschlag 1154 wiederum an dem der Federriegel in der geschlossenen Stellung (siehe Fig. 5) anliegt, verhindert, dass der Hebel unbeabsichtig aus der geschlossenen Stellung in die geöffnete Stellung verbracht wird. Bei dem Federriegel 1148 handelt es sich um einen Riegel, der gegen eine axiale Federkraft wirkt, um in eine geöffnete Stellung verbracht werden zu können.

Wird der Hebel 1080 um den ersten Drehpunkt 1090.1 nach unten bewegt, so wird wie in Figur 5 gezeigt zunächst die Arretiervorrichtung 1030 nach unten bewegt, so dass diese in der Halteschiene eintaucht.

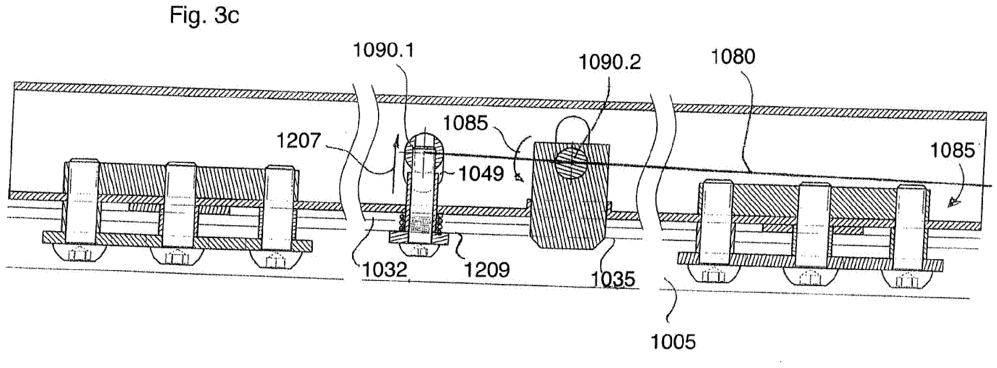

Durch Herabdrücken des Hebels 1080 wechselt wie in Figur 3b und 3c dargestellt, der Drehpunkt vom ersten Drehpunkt 1190.1 zum zweiten Drehpunkt 1190.2. Der zunächst einseitige Hebel wird bei Verdrehen um den zweiten Drehpunkt 1190.2 zu einem zweiseitigen Hebel. Durch das Verdrehen des Hebels 1080 um den zweiten Drehpunkt 1190.2 wird auch die Spannvorrichtung 1040 im Langloch 1149 nach oben gezogen, gegen die Federkraft des als Federblechs ausgebildeten Formbleches 1150 und so die Vorrichtung zum zeitweiligen Verbinden eines Gegenstandes, insbesondere eines Fahrzeugsitzes, verspannt. Hierdurch wird der Fahrzeugsitz bzw. die Vorrichtung gegen ein Verrutschen gesichert.

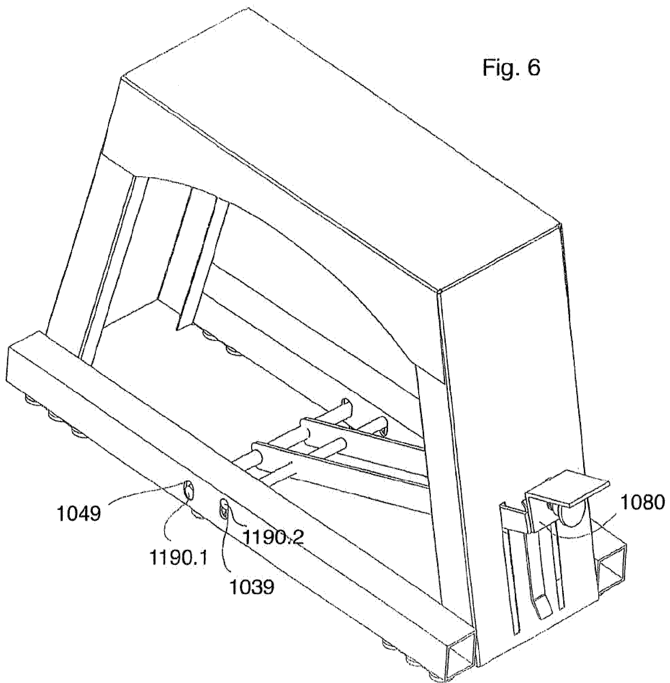

Figur 6 zeigt eine 3-dimensionale Ansicht einer Vorrichtung zum temporären Verbinden eines Gegenstandes mit den Arretierprofilen und Hebelarm in geöffneter Stellung. Bei der in Figur 6 gezeigten Vorrichtung handelt es sich um eine solche mit zwei Arretierprofilen, ohne hierauf beschränkt zu sein.

Gleiche Bauteile wie in den Figuren 4 und 5 sind mit denselben Bezugsziffern belegt. Deutlich zu erkennen sind die beiden Drehachsen bzw. Anlenkachsen, die dem ersten 1190.1 und zweiten Drehpunkt 1190.2 des Hebelarmes 1080 zugeordnet sind und bei Bewegung um den ersten bzw. zweiten Drehpunkt in den Langlöchern 1039 bzw. 1049 nach unten bzw. oben bewegt werden, wodurch die Arretiervorrichtung in die Halteschiene verbracht wird und die Arretierprofile 1001 des Weiteren mit der Halteschiene (nicht gezeigt) auch verspannt werden. Deutlich zu erkennen ist auch das Sicherungsblech 1146 und die Anschläge bzw. Vorsprünge 1152, 1154 des Sicherungsbleches 1146. Des Weiteren gut zu sehen ist das Vierkantprofil der Arretierprofile.

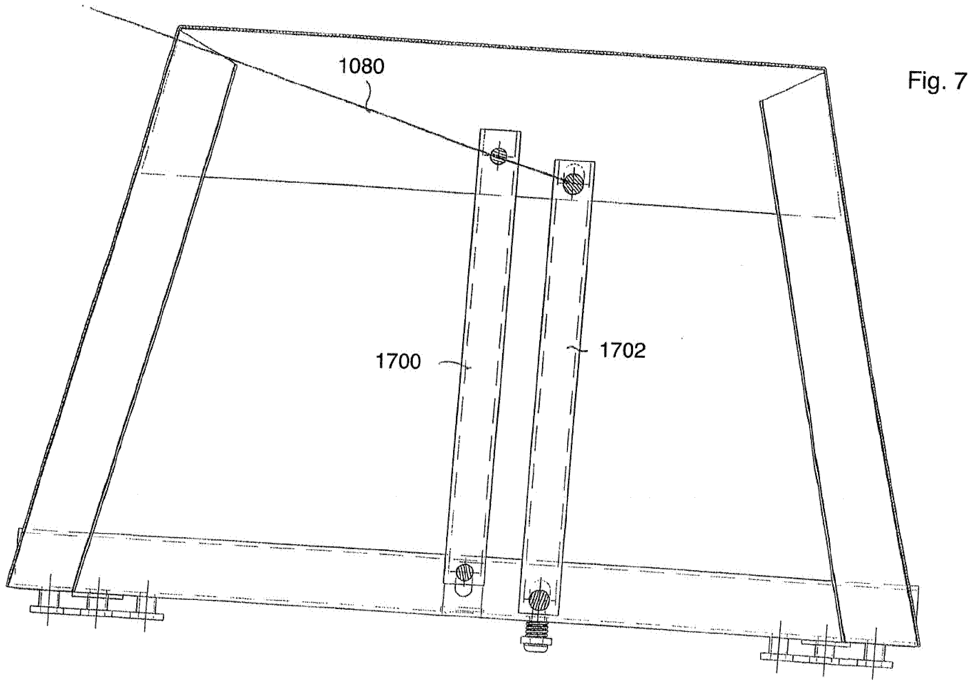

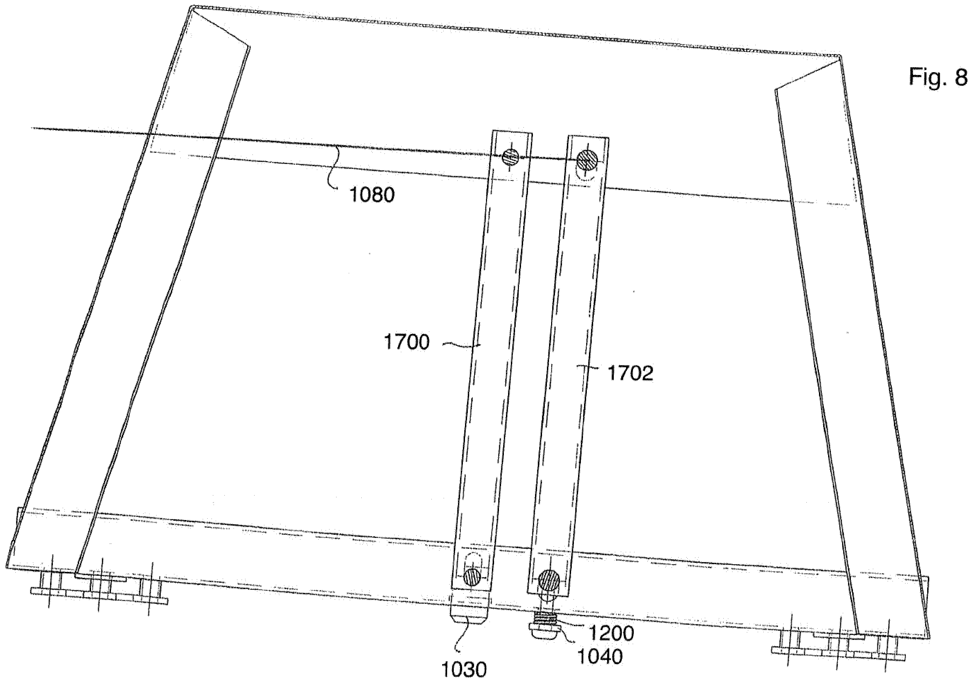

Die Figuren 7 und 8 zeigen Ausführungsformen der Erfindung bei denen der Hebelarm 1080 in der Vorrichtung zum temporären Verbinden eines Gegenstandes vom Bereich des Bodens, wo die Halteschiene befestigt ist, nach oben, wo beispielsweise eine Sitzbank montiert sein kann, verlegt wird. Hierdurch wird die Bedienung des Hebels 1080 deutlich vereinfacht, insbesondere muss der Bediener sich zum Auslösen des Hebels nicht mehr bücken und auch höhere Kräfte können eingeleitet werden. Eine Verlegung des Hebelarmes nach oben ist nur möglich, weil insgesamt zwei stabförmige Vorrichtungen 1700, 1702 vorgesehen sind, wobei der Stab 1700 mit der Arretiervorrichtung in Form eines Arretierbolzens 1030 und der Stab 1702 mit der Spannvorrichtung 1040 verbunden sind. Figur 7 zeigt die Vorrichtung mit geöffnetem Hebel, d. h. der Arretierbolzen ist angehoben und nicht in die Halteschiene abgesenkt, und die Spannvorrichtung wird durch ein Federelement 1200 hier eine Druckfeder in der abgesenkten Stellung gehalten. Wird, wie in Fig. 8 gezeigt, der Hebel 1080 nach unten verbracht, so wird der Arretierbolzen 1030 in die Halteschiene abgesenkt und die Spannvorrichtung 1040 nach oben gezogen und somit die Vorrichtung arretiert und verspannt.

In den Figuren 9 und 10 sind Draufsichten, auf die zur Führung eingesetzten Formbleche, gezeigt. Figur 9 zeigt eine Draufsicht auf ein Formblech 1160 mit drei Bohrungen 1140.1, 1140.2, 1140.3. Aufgrund der Außenform des Formbleches, insbesondere im Bereich der Bohrungen weist das Formblech Führungseigenschaften in der Halteschiene auf.

Figur 10 zeigt ein Formblech als Federblech 1150 mit drei Bohrungen 1140.4, 1140.5, 1140.6. Das Federblech 1150 hält an der Bohrung 1140.7, durch die die Spannvorrichtung hindurchgeführt wird, die Spannvorrichtung nieder und verhindert, dass diese während des Arretiervorgangs nach oben bewegt wird.

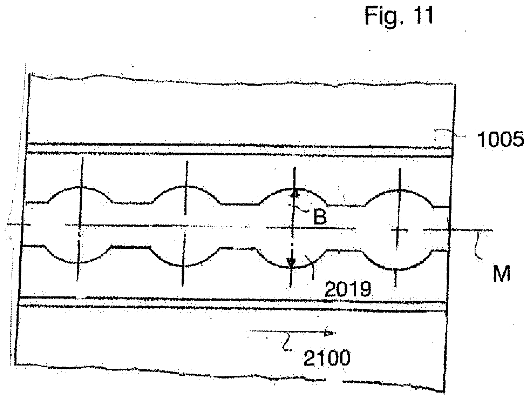

Figur 11 zeigt in Draufsicht eine Halteschiene 1005, die in Abständen von der Mittellinie M mit Bohrungen 2019 versehen sind. Die Bohrungen 2019 weisen eine Breite B auf, die im Wesentlichen der Mündungsbreite der Halteschiene entspricht.

In der Halteschiene wird eine T-förmige Nut ausgebildet. In die Öffnungen 2019 können die Formbleche 1150, 1160 eingeführt werden. Das Arretierprofil wird dann in axialer Richtung 2100 so verschoben, dass der als Führung ausgebildete Bereich der Formbleche im Bereich der T-förmigen Nut zu liegen kommt.

Andererseits kommt dann der Arretiervorrichtung direkt über einer Öffnung 2019 zum Liegen. Wird der Hebel ausgelöst und die Arretiervorrichtung freigegeben, so fällt diese durch die Hebelwirkung und ihr Eigengewicht in eine Öffnung 2019 und verhindert eine Bewegung des Arretierprofils in Längsrichtung 2100 der Halteschiene. Die Verspannung mit Hilfe der Spannvorrichtung erfolgt gegen die T-förmige Nut der Halteschiene.

Mit der vorliegenden Erfindung wird erstmals eine Anordnung zum temporären Verbinden eines bewegbaren Gegenstandes in einer Halteschiene angegeben, die die Nachteile aus dem Stand der Technik, insbesondere der EP 2 253 500 A2, vermeidet, nämlich dass bereits während des Arretiervorganges ein Verspannen erfolgt, so dass die Suchfunktion des Arretierbolzens eingeschränkt wird und der Mechanismus schwergängig ist, da der Arretierbolzen an der Seitenwand der Bohrung der Halteschiene reibt oder die gesamte Vorrichtung noch gegen die bereits einsetzende Spannkraft verschoben werden muss.

### Bezugszeichenliste:

- M: Mittellinie
- 1, 1001: Arretierprofil
- 5, 1005: Halteschiene
- 30: Arretierbolzen
- 32.1: axiale Richtung
- 32.2: Pfeil
- 34: Aufnahme
- 38: Anlenkachse
- 39: Langloch
- 40: Spannbolzen
- 41: Tellerrand
- 42.1: axiale Richtung
- 44: Aufnahme
- 46: Sprengring
- 48: Anlenkachse
- 49: Langloch
- 54.1, 54.2, 54.3, 54.4, 54.5: Gleitelemente
- 80: Hebelarm
- 90: Drehpunkt
- 1030: Arretiervorrichtung
- 1032: Oberkante der Halteschiene
- 1035: T-Nut Oberkante
- 1039: Langloch
- 1040: Spannvorrichtung
- 1042: Schraube
- 1044: Unterlagscheibe
- 1049: Langloch
- 1080: Hebel
- 1085: Richtung
- 1090.1: erster Drehpunkt
- 1090.2: zweiter Drehpunkt
- 1140.1 - 1140.7: Bohrungen
- 1142: Distanzbuchsen
- 1144: Linsenkopfschraube
- 1146: Sicherungsblech
- 1148: Federriegel
- 1150: Formblech als Federblech
- 1152: oberer Vorsprung
- 1154: Anschlag
- 1160: Formblech
- 1200: Federelement
- 1205: Bewegungsrichtung
- 1207: Richtung
- 1700: stabförmige Vorrichtung
- 1702: stabförmige Vorrichtung
- 2019: Bohrungen der Halteschiene
- 2100: Längsrichtung der Halteschiene

## Patentansprüche

1. Vorrichtung zum zeitweiligen Verbinden eines bewegbaren Gegenstandes, insbesondere eines Fahrzeugsitzes mit einer Längsnuten aufweisenden Halteschiene (1005) wobei die Vorrichtung wenigstens eine axial verschiebbare Arretiervorrichtung (1030) und wenigstens eine axial verschiebbare Spannvorrichtung (1040), die in Abstand zur Arretiervorrichtung (1030) angeordnet ist, zum Eingriff in die Halteschiene (1005) aufweist und die Arretiervorrichtung (1030) und die Spannvorrichtung (1040) durch eine Hebelvorrichtung (1080), insbesondere einen Hebelarm gemeinsam axial verstellbar sind, wobei die Hebelvorrichtung (1080) um einen ersten Drehpunkt (1090.1) als einseitiger Hebel und um einen zweiten Drehpunkt (1090.2) als zweiseitiger Hebel wirkt wobei die Hebelvorrichtung (1080) um den ersten Drehpunkt (1090.1) eine Arretiervorrichtung (1030) und um den zweiten Drehpunkt (1090.2) eine Spannvorrichtung (1040) anlenkt ,
**dadurch gekennzeichnet, dass** die Vorrichtung ein Arretierprofil (1001) mit einem Langloch (1039) umfasst und durch das Verschwenken der Hebelvorrichtung (1080) um den ersten Drehpunkt (1090.1) der Arretierbolzen im Langloch (1039) nach unten bewegt wird, wobei aufgrund eines Federelementes (1200) trotz Bewegens der Arretiervorrichtung (1030) im Langloch (1039) die Spannvorrichtung (1040) niedergehalten wird und nach Abschluss des Arretier vorganges der Drehpunkt vom ersten Drehpunkt (1090.1) zum zweiten Drehpunkt (1090.2) wechselt und durch die Bewegung der Hebelvorrichtung (1080) um den zweiten Drehpunkt (1090.2) die Spannvorrichtung (1040) in einem zweiten Langloch (1049) des Arretierprofils (1001) gegen die Kraft eines Federelementes (1200) nach oben verbracht und mit der Oberkante (1035) der Halteschiene (1005) verspannt wird.

2. Vorrichtung nach Anspruch 1,
**dadurch gekennzeichnet, dass**
die Vorrichtung derart ausgestaltet ist, dass im Fall der Verspannung die Spannvorrichtung form- und kraftschlüssig an der Halteschiene (1005) anliegt.

3. Vorrichtung nach Anspruch 1 oder 2, **dadurch gekennzeichnet, dass** das Federelement (1200) eine Druckfeder und/oder ein Federblech umfasst.

4. Vorrichtung nach einem der Ansprüche 1 bis 3, **dadurch gekennzeichnet, dass** das Arretierprofil (1001) wenigstens ein Formblech (1150, 1160) umfasst, das aufgrund seiner Außenform das Arretierprofil in der Halteschiene (1005) führt.

5. Vorrichtung nach einem der Ansprüche 1 bis 4, **dadurch gekennzeichnet, dass** die Vorrichtung zwei stabförmige Vorrichtungen (1700, 1702) umfasst, mit denen der Hebelarm vom Boden weg nach oben verlegt wird.

6. Vorrichtung nach Anspruch 5, **dadurch gekennzeichnet, dass** die erste stabförmige Vorrichtung (1700) mit der Arretiervorrichtung (1030) und die zweite stabförmige Vorrichtung (1702) mit der Spannvorrichtung (1040) verbunden ist.

7. Vorrichtung nach einem der Ansprüche 1 bis 6, **dadurch gekennzeichnet, dass** die Hebelvorrichtung ein Sicherungsblech (1146), bevorzugt mit einem oberen Vorsprung (1152) sowie einem Anschlag (1154) umfasst.

8. Vorrichtung nach Anspruch 7, **dadurch gekennzeichnet, dass** die Hebelvorrichtung einen Federriegel (1148) umfasst, wobei der Federriegel (1148) derart ausgebildet ist, dass die Hebelvorrichtung durch das Sicherungsblech (1146) mit Hilfe des Federriegels (1148) in Endstellungen fixierbar ist.

## Claims

1. Device for temporarily connecting a movable object, in particular a vehicle seat, to a holding rail (1005) having longitudinal grooves, wherein the device has at least one axially displaceable locking device (1030) and at least one axially displaceable clamping device (1040), which is arranged at a distance from the locking device (1030), for engagement in the holding rail (1005), and the locking device (1030) and the clamping device (1040) are jointly axially adjustable by a lever device (1080), in particular a lever arm, wherein the lever device (1080) acts as a single-sided lever about a first pivot point (1090.1) and about a second pivot point (1090.2) as a two-sided lever, wherein the lever device (1080) hinges a locking device (1030) about the first pivot point (1090.1) and a clamping device (1040) about the second pivot point (1090.2),
**characterized in that**
the device comprises a locking profile (1001) having an elongated hole (1039) and is moved downwards by the pivoting of the lever device (1080) about the first pivot point (1090.1) of the locking bolts in the elongated hole (1039), wherein, due to a spring element (1200), the clamping device (1040) is held down despite the movement of the locking device (1030) in the elongated hole (1039) and, after the locking operation is completed, the pivot point changes from the first pivot point (1090.1) to the second pivot point (1090.2) and, by the movement of the lever device (1080) around the second pivot point (1090.2), the clamping device (1040) is brought upwards in a second elongated hole (1049) of the locking profile (1001) against the force of a spring element (1200) and is clamped to the upper edge (1035) of the holding rail (1005).

2. Device according to claim 1,
**characterized in that**
the device is configured in such a way that, when clamped, the clamping device rests against the holding rail (1005) in a form-fitting and force-fitting manner.

3. Device according to claim 1 or 2,
**characterized in that**
the spring element (1200) comprises a pressure spring and/or a spring plate.

4. Device according to one of the claims 1 to 3,
**characterized in that**
the locking profile (1001) comprises at least one shaped plate (1150, 1160) which, on the basis of its outer shape, guides the locking profile in the holding rail (1005).

5. Device according to one of claims 1 to 4,
**characterized in that**
the device comprises two rod-shaped devices (1700, 1702) with which the lever arm is moved away from the ground and upwards.

6. Device according to claim 5,
**characterized in that**
the first rod-shaped device (1700) is connected to the locking device (1030) and the second rod-shaped device (1702) is connected to the clamping device (1040).

7. Device according to one of claims 1 to 6,
**characterized in that**
the lever device comprises a locking plate (1146), preferably with an upper projection (1152) and a stop (1154).

8. Device according to claim 7,
**characterized in that**
the lever device comprises a spring latch (1148), wherein the spring latch (1148) is designed in such a way that the lever device can be fixed in end positions by the locking plate (1146) with the aid of the spring latch (1148).

## Revendications

1. Dispositif pour la liaison provisoire d'un objet déplaçable, en particulier d'un siège de véhicule, à un rail de fixation (1005) comportant des rainures latérales, lequel dispositif comporte au moins un dispositif de blocage (1030) capable de translation axiale et au moins un dispositif de serrage (1040) capable de translation axiale, qui est disposé à distance du dispositif de blocage (1030), pour se mettre en prise dans le rail de fixation (1005), et le dispositif de blocage (1030) et le dispositif de serrage (1040) peuvent être déplacés ensemble dans le sens axial par un dispositif de levier (1080), en particulier un bras de levier, le dispositif de levier (1080) agissant comme un levier à simple action autour d'un premier point de pivot (1090.1) et comme un levier à double action autour d'un deuxième point de pivot (1090.2), le dispositif de levier (1080) articulant un dispositif de blocage (1030) autour du premier point de pivot (1090.1) et un dispositif de serrage (1040) autour du deuxième point de pivot (1090.2),
**caractérisé en ce que**
le dispositif comprend un profilé de blocage (1001) muni d'un trou oblong (1039) et le pivotement du dispositif de levier (1080) autour du premier point de pivot (1090.1) déplace le boulon de blocage dans le trou oblong (1039) vers le bas, le dispositif de serrage (1040) étant maintenu vers le bas sous l'action d'un élément de ressort (1200) malgré le mouvement du dispositif de blocage (1030) dans le trou oblong (1039) et le point de pivot passant du premier point de pivot (1090.1) au deuxième point de pivot (1090.2) quand l'opération de blocage est terminée, et le dispositif de serrage (1040) étant amené vers le haut dans un deuxième trou oblong (1049) du profilé de blocage (1001) contre la force d'un élément de ressort (1200) par le mouvement du dispositif de levier (1080) autour du deuxième point de pivot (1090.2) et serré avec l'arête supérieure (1035) du rail de fixation (1005).

2. Dispositif selon la revendication 1,
**caractérisé en ce qu'**il
est conçu de telle manière que, en cas de serrage, le dispositif de serrage repose sur le rail de fixation (1005) par engagement positif et par friction.

3. Dispositif selon la revendication 1 ou 2,
**caractérisé en ce que**
l'élément de ressort (1200) comprend un ressort de compression et/ou une tôle élastique.

4. Dispositif selon l'une des revendications 1 à 3,
**caractérisé en ce que**
le profilé de blocage (1001) comprend au moins une tôle profilée (1150, 1160) qui, de par sa forme extérieure, guide le profilé de blocage dans le rail de fixation (1005).

5. Dispositif selon l'une des revendications 1 à 4,
**caractérisé en ce qu'**il
comprend deux dispositifs en forme de barres (1700, 1702) avec lesquels le bras de levier est écarté du fond vers le haut.

6. Dispositif selon la revendication 5,
**caractérisé en ce que**
le premier dispositif en forme de barre (1700) est relié au dispositif de blocage (1030) et le deuxième dispositif en forme de barre (1702) au dispositif de serrage (1040).

7. Dispositif selon l'une des revendications 1 à 6,
**caractérisé en ce que**
le dispositif de levier comprend une tôle d'arrêt (1146), de préférence avec une saillie supérieure (1152), et une butée (1154).

8. Dispositif selon la revendication 7,
**caractérisé en ce que**
le dispositif de levier comprend une targette à ressort (1148), laquelle targette à ressort (1148) est conformée de telle manière que le dispositif de levier puisse être fixé dans des positions de fin de course par la tôle d'arrêt (1146) à l'aide de la targette à ressort (1148).
